# FASCICULE DE BREVET EUROPEEN

(11) **EP 3 530 495 B1**
(45) Date de publication et mention de la délivrance du brevet: **17.02.2021**
(21) Numéro de dépôt: 19153989.9
(22) Date de dépôt: 28.01.2019
(51) Int. Cl.: B60D 1/06, B60D 1/60

(54) **DISPOSITIF ANTIVOL AMOVIBLE POUR ATTELAGE**
ENTFERNBARE DIEBSTAHLSICHERUNGSVORRICHTUNG FÜR ANHÄNGERKUPPLUNG
REMOVABLE ANTI-THEFT DEVICE FOR COUPLING

(30) Priorité: 22.02.2018 FR 1851534
(43) Date de publication de la demande: 28.08.2019
(73) Titulaire: Etablissements Mottez & Cie, 59193 Erquinghem-Lys (FR)
(72) Inventeur: MOTTEZ, Frédéric, 59000 LILLE (FR)
(74) Mandataire: Bureau Duthoit Legros Associés

(56) Documents cités:
- WO-A1-96/28312
- WO-A1-2013/071431
- US-A- 6 062 583

## Description

La présente invention a pour objet un dispositif antivol, amovible, pour attelage. L'invention concerne également une remorque comprenant un tel dispositif antivol. L'invention concerne encore un ensemble comprenant un véhicule automobile, une remorque et un tel dispositif antivol.

L'invention concerne enfin un procédé d'installation d'un tel dispositif antivol amovible sur un attelage Le document WO 96/28312 A1 divulgue un dispositif antivol selon le préambule de la revendication 1.

La présente invention trouve ainsi une application particulièrement avantageuse dans le domaine des accessoires automobiles permettant d'empêcher les vols de remorque.

Par remorque au sens de la présente invention, il faut comprendre dans toute la description qui suit : tout type de système destiné à être fixé à l'arrière d'un véhicule par l'intermédiaire d'un attelage. Il peut s'agir par exemple d'une remorque, mais il peut également s'agir d'une caravane, d'une carriole, d'un box pour cheval ou de tout autre système d'attelage équivalent.

Selon les modèles, un tel dispositif antivol peut être utilisé sur une remorque en position attelée ou non.

De façon bien connue, une remorque comporte généralement une barre d'attelage, fixée au niveau de l'une de ses extrémités, à l'extrémité de laquelle est fixée une tête d'attelage présentant une cavité destinée à recevoir dans une position attelée une boule d'attelage, de forme complémentaire à la cavité, montée sur un véhicule tracteur pour solidariser ladite remorque et ledit véhicule.

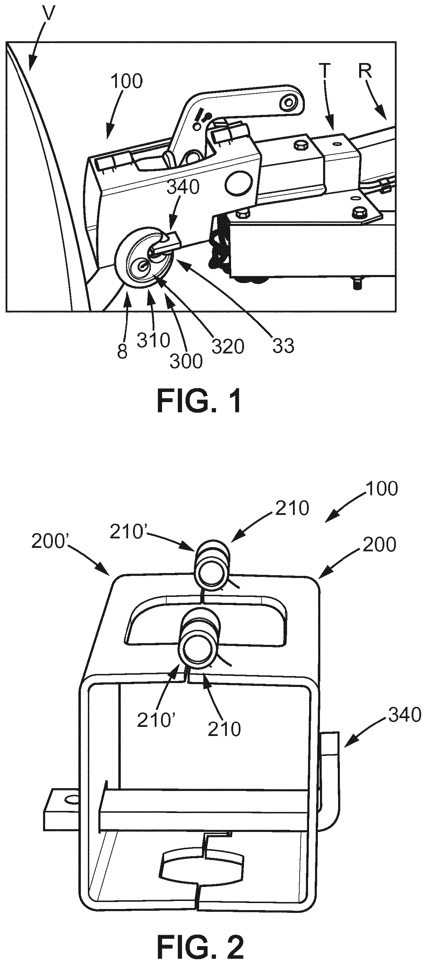

Généralement, comme visible sur les figures 1 et 2, représentant l'état de la technique, un dispositif antivol 100 équipant la tête d'attelage T d'une remorque R se présente sous la forme de deux demi-coques 200, 200', articulées via des charnières 210, 210', aptes, d'une part, lorsque mises en butée l'une contre l'autre, dans une position de fermeture, à former un boîtier antivol, configuré pour venir enserrer ladite tête d'attelage T, et éventuellement ladite boule d'attelage B fixée sur le véhicule tracteur V, et d'autre part, lorsque écartées l'une de l'autre par rotation autour des charnières 210, 210' à prendre une position d'ouverture permettant le retrait du dispositif antivol 100 de ladite tête d'attelage T.

Un tel dispositif antivol 100 comporte également un moyen de verrouillage 300 configuré pour bloquer les deux demi-coques 200, 200' dans la première position de fermeture avec un cadenas 310 présentant une portion de réception d'une clé 320 et une anse 330.

Le moyen de verrouillage 300 comporte également une languette 340 traversant deux logements en vis-à-vis, situés chacun sur une des deux demi-coques 200, 200', et coopérant avec ledit cadenas 310 pour assurer l'arrêt en translation de ladite languette 340 par rapport aux deux demi-coques 200, 200', afin de verrouiller ledit dispositif antivol dans ladite position de fermeture.

Un tel dispositif antivol présente plusieurs inconvénients. Tout d'abord, le cadenas est prévu pour être disposé à l'extérieur du boîtier et reste de ce fait accessible et peut donc être brisé, par exemple à l'aide d'une masse, par une personne mal intentionnée pour voler la remorque.

De plus, un tel dispositif antivol présente quatre parties amovibles (les deux demi-coques 200, 200', la languette 340 et le cadenas 310), ce qui complique son stockage lorsqu'inutilisé, lesdites parties amovibles pouvant être égarées.

Un tel dispositif antivol 100 s'avère également particulièrement fastidieux à installer au niveau de ladite tête d'attelage T de la remorque R, notamment à cause du grand nombre d'éléments qu'il faut assembler entre eux pour assurer la mise en position adéquat dudit dispositif antivol 100 de sorte à ce qu'il vienne enserrer ladite tête d'attelage T.

L'invention se propose de pallier à ces inconvénients en proposant un dispositif antivol pour attelage à la sécurité améliorée et dont la conception facilite son installation sur une tête d'attelage et son stockage lorsqu'inutilisé.

D'autres avantages de l'invention apparaîtront au cours de la description qui va suivre et n'est donnée qu'à titre indicatif.

Ainsi, l'invention concerne un dispositif antivol amovible pour attelage, ledit attelage comprenant une tête d'attelage montée sur une remorque et présentant une cavité destinée à recevoir dans une position attelée une boule d'attelage, de forme complémentaire à la cavité, montée sur un véhicule tracteur pour solidariser ladite remorque et ledit véhicule.

Selon l'invention, ledit dispositif antivol comporte :
- deux demi-coques, articulées via des charnières, aptes, d'une part, lorsque mises en butée l'une contre l'autre, dans une position de fermeture, à former un boîtier antivol, configuré pour venir enserrer ladite tête d'attelage, et éventuellement ladite boule d'attelage fixée sur le véhicule tracteur, et d'autre part, lorsqu'écartées l'une de l'autre par rotation autour des charnières, à prendre une position d'ouverture permettant le retrait du dispositif antivol de ladite tête d'attelage,
- un moyen de verrouillage configuré pour bloquer les deux demi-coques dans la première position de fermeture avec un cadenas présentant une portion de réception d'une clé et une anse.

Selon l'invention :
- chaque demi-coque est équipée d'une patte de fixation, chaque patte de fixation comportant un perçage, les perçages étant destinés à se retrouver en vis-à-vis l'un de l'autre lorsque les deux demi-coques sont dans ladite position de fermeture,
- le dispositif antivol comporte un carénage fixé sur une paroi de l'une des deux demi-coques, ledit carénage formant avec ladite paroi de la demi-coque un logement, le logement recevant le cadenas, et maintenant le cadenas dans une position telle que, dans ladite position de fermeture des deux demi-coques, ladite anse est actionnable par l'intermédiaire d'une clé reçue dans ladite portion de réception d'une clé du cadenas, afin de passer d'une position non verrouillée, dans laquelle elle est escamotée d'au moins un des perçages en vis-à-vis des pattes de fixation vers une position verrouillée, dans laquelle ladite anse traverse les deux perçages en vis-à-vis des pattes de fixation.

Selon des caractéristiques optionnelles de l'invention, prises seules ou en combinaison :
- dans ladite position de fermeture, le carénage est configuré de sorte à laisser accessible uniquement la portion de réception d'une clé du cadenas, au moins partiellement, lorsque ledit carénage est fixé sur ladite paroi de la demi-coque
- le carénage est conformé de sorte à exercer un appui sur le cadenas, lorsque fixé sur ladite paroi, de sorte à assurer son maintien en position par rapport à la demi-coque, selon une direction perpendiculaire au plan de ladite paroi,
- le dispositif antivol comprend des moyens de centrage assurant le centrage du cadenas par rapport au carénage et par rapport à ladite paroi de la demi-coque recevant ledit carénage,
- la portion de réception d'une clé du cadenas comporte deux faces parallèles entre-elles, une des faces étant en appui contre ladite paroi de la demi-coque recevant le carénage, les moyens de centrage comportant une première protubérance ménagée en saillie sur une desdites faces de la portion de réception d'une clé du cadenas, ainsi qu'un premier logement ménagé sur ladite paroi de la demi-coque, conformé de sorte à recevoir ladite première protubérance au jeu d'emboîtement près, et/ou une deuxième protubérance ménagée en saillie sur l'autre face de la portion de réception d'une clé du cadenas et un deuxième logement ménagé sur le carénage, conformé de sorte à recevoir la deuxième protubérance au jeu d'emboîtement près,
- le boîtier formé par les deux demi-coques en position fermée est de forme sensiblement parallélépipédique, comprenant une paroi supérieure, une paroi inférieure, une première paroi latérale et une deuxième paroi latérale, chaque demi-coque comportant une partie de ladite paroi supérieure, une partie de ladite paroi inférieure et une desdites parois latérales, chaque patte de fixation de chaque demi-coque étant disposée sur la paroi inférieure du boîtier, la portion de chaque patte de fixation comportant le perçage étant positionnée débordante au niveau de ladite paroi de la demi-coque au niveau de laquelle est fixé le carénage,
- le carénage amovible est fixé sur ladite paroi de la demi-coque par l'intermédiaire de deux vis, les vis étant positionnées de part et d'autre du cadenas et venant appuyer sur le cadenas, de sorte à assurer son maintien en position par rapport à la demi-coque, selon une direction parallèle au plan de ladite paroi recevant le carénage,
- les vis comportent une tête lisse, positionnée au niveau d'une paroi extérieure du carénage, et lesdites vis coopèrent avec des boulons positionnés au niveau d'une face intérieure de ladite paroi de la demi-coque recevant le carénage,
- ladite paroi de la demi-coque recevant le carénage en fixation comporte une rainure conformée de sorte à recevoir une patte saillante du carénage afin d'assurer le maintien en position du carénage par rapport à la demi-coque,
- la patte de fixation de la demi-coque recevant le carénage comporte une rainure conformée de sorte à recevoir une patte saillante du carénage afin d'assurer le maintien en position du carénage par rapport à la demi-coque,
- le cadenas est un cadenas en forme de disque, ladite portion de réception d'une clé comprenant deux faces, parallèles entre elles, l'anse du cadenas s'étendant dans le prolongement desdites faces circulaires, une desdites faces parallèles étant en appui contre ladite paroi de la demi-coque recevant le carénage amovible.

L'invention concerne également une remorque comprenant une tête d'attelage présentant une cavité destinée à recevoir dans une position attelée une boule d'attelage, de forme complémentaire à la cavité, montée sur un véhicule tracteur pour solidariser ladite remorque et ledit véhicule, et un dispositif antivol selon l'invention fixé sur ladite tête d'attelage, les demi-coques du dispositif antivol venant enserrer ladite tête d'attelage, en position de fermeture.

L'invention concerne encore un ensemble comprenant :
- un véhicule tracteur comprenant une boule d'attelage,
- une remorque comprenant une tête d'attelage présentant une cavité recevant dans une position attelée ladite boule d'attelage, de forme complémentaire à la cavité,
- un dispositif antivol selon l'invention, les demi-coques du dispositif antivol venant enserrer ladite tête d'attelage et ladite boule d'attelage, en position de fermeture.

L'invention concerne enfin un procédé d'installation d'un dispositif antivol selon l'invention sur une tête d'attelage d'une remorque, présentant une cavité destinée à recevoir dans une position attelée une boule d'attelage, de forme complémentaire à la cavité, montée sur un véhicule tracteur pour solidariser ladite remorque et ledit véhicule, ledit procédé comprenant les étapes :
a) ouverture du cadenas du dispositif antivol,
b) positionnement des deux demi-coques en position d'ouverture,
c) mise en position du dispositif antivol au niveau de la tête d'attelage, de sorte que les deux demi-coques viennent enserrer ladite tête d'attelage,
d) positionnement des deux demi-coques en position de fermeture,
e) fermeture du cadenas.

L'invention sera mieux comprise à la lecture de la description suivante accompagnée des figures en annexe, parmi lesquelles :
- La figure 1 est une vue en perspective représentant un dispositif antivol pour attelage de l'état de la technique en position de verrouillage sur une tête d'attelage de remorque recevant une boule d'attelage fixée sur un véhicule tracteur,
- La figure 2 est une vue de face du dispositif antivol de la figure 1,
- La figure 3 est une vue en perspective d'un dispositif antivol selon un mode de réalisation conforme à l'invention,
- La figure 4 est une vue en perspective d'un cadenas d'un dispositif antivol selon un mode de réalisation conforme à l'invention,
- La figure 5 est une vue en éclaté du dispositif antivol de la figure 3,
- La figure 6 est une vue en perspective d'une des demi-coques du dispositif antivol de la figure 3,
- La figure 7 est une vue en perspective de l'autre demi-coque du dispositif antivol de la figure 3,
- La figure 8 est une vue en perspective de l'extérieur du carénage du dispositif antivol de la figure 3,
- La figure 9 est une vue en perspective de l'intérieur du carénage du dispositif antivol de la figure 3,
- La figure 10 est une vue en coupe partielle du dispositif antivol de la figure 3 selon la ligne IX-IX de la figure 3,
- La figure 11 est une vue de côté d'une boule d'attelage accrochée à un véhicule tracteur et d'une tête d'attelage accrochée à une remorque, destinées à recevoir un dispositif antivol conforme à un mode de réalisation de l'invention.

L'invention concerne un dispositif antivol 1 amovible pour attelage, ledit attelage comprenant une tête d'attelage T montée sur une remorque R et présentant une cavité C destinée à recevoir dans une position attelée une boule d'attelage B, de forme complémentaire à la cavité C, montée sur un véhicule tracteur V pour solidariser ladite remorque et ledit véhicule V.

Ledit dispositif antivol 1 comporte :
- deux demi-coques 2, 2', articulées via des charnières 21, 21', aptes, d'une part, lorsque mises en butée l'une contre l'autre, dans une position de fermeture, à former un boîtier antivol, configuré pour venir enserrer ladite tête d'attelage T, et éventuellement ladite boule d'attelage B fixée sur le véhicule tracteur V, et d'autre part, lorsqu'écartées l'une de l'autre par rotation autour des charnières 21, 21', à prendre une position d'ouverture permettant le retrait du dispositif antivol 1 de ladite tête d'attelage T,
- un moyen de verrouillage 3 configuré pour bloquer le deux demi-coques 2, 2' dans la première position de fermeture avec un cadenas 31 présentant une portion de réception d'une clé 32 et une anse 33.

Selon l'invention :
- chaque demi-coque 2, 2' est équipée d'une patte de fixation 22, 22', notamment fixée par soudure, chaque patte de fixation 22, 22' comportant un perçage 23, 23', les perçages 23, 23' étant destinés à se retrouver en vis-à-vis l'un de l'autre lorsque les deux demi-coques 2, 2' sont dans ladite position de fermeture,
- le dispositif antivol 1 comporte un carénage 4 fixé sur une paroi 24 de l'une des deux-demis coques 2, 2', ledit carénage 4 formant avec ladite paroi 24 de la demi-coque 2 un logement, le logement recevant le cadenas 31, et maintenant le cadenas 31 dans une position telle que, dans ladite position de fermeture des deux demi-coques 2, 2', ladite anse 33 est actionnable par l'intermédiaire d'une clé reçue dans ladite portion de réception d'une clé 32 du cadenas 31, afin de passer d'une position non verrouillée, dans laquelle elle est escamotée d'au moins un des perçages 23, 23' en vis-à-vis des pattes de fixation 22, 22' vers une position verrouillée, dans laquelle ladite anse 33 traverse les deux perçages 23, 23' en vis-à-vis des pattes de fixation 22, 22'.

Avantageusement, le carénage 4 peut être configuré de sorte à laisser accessible uniquement la portion de réception d'une clé 32 du cadenas 31, au moins partiellement, lorsque ledit carénage 4 est fixé sur ladite paroi 24 de la demi-coque 2.

Ainsi, seule la portion de réception d'une clé 32 du cadenas 31 demeure accessible une fois le dispositif antivol 1 mis en place et verrouillé en position de fermeture sur ladite tête d'attelage T, les autres parties du cadenas 31, et notamment l'anse 33, étant logées intégralement dans le logement défini entre le carénage 4 et ladite paroi 24 de ladite demi-coque 2. Une personne mal intentionnée ne pourra pas tenter d'ouvrir le cadenas par effraction, notamment en tentant de briser ladite anse 33, pour voler la remorque R.

Le dispositif antivol 1 selon l'invention est donc particulièrement fiable en termes de sécurité.

Par ailleurs, le carénage 4 étant fixé à ladite paroi 24 de la demi-coque 2, le cadenas 31 étant maintenu dans le logement défini entre le carénage et ladite paroi 24, et lesdites pattes de fixation 22, 22' étant fixées, notamment soudées sur chacune des deux demi-coques 2, 2', le dispositif antivol 1 selon l'invention peut ne comporter uniquement que deux éléments amovibles, ce qui facilite grandement son installation sur un tête d'attelage T et son stockage lorsqu'inutilisé.

Avantageusement, chacune des deux demi-coques 2, 2' est réalisée sous la forme d'une tôle découpée et pliée, le carénage 4 pouvant également être avantageusement réalisé sous la forme d'une tôle découpée et pliée, par exemple de même épaisseur que la tôle formant chacune des deux demi-coques 2, 2'.

Selon un mode de réalisation, le boîtier formé par les deux demi-coques 2, 2' en position fermée, est de forme sensiblement parallélépipédique, comprenant une paroi supérieure PS, une paroi inférieure PI, une première paroi latérale PL et une deuxième paroi latérale PL', chaque demi-coque 2, 2' comportant une partie 25, 25' de ladite paroi supérieure PS, une partie 26, 26' de ladite paroi inférieure PI et une desdites parois latérales PL, PL' chaque patte de fixation 22, 22' de chaque demi-coque 2, 2' étant disposée sur la paroi inférieure PI du boîtier, la portion de chaque patte de fixation 22, 22' comportant le perçage 23, 23' étant positionnée débordante au niveau de ladite paroi 24 de la demi-coque 2 au niveau de laquelle est fixé le carénage 4.

Dans toute la description de la présente demande, les références spatiales (supérieure, inférieure, latérale, avant, arrière) sont considérées lorsque le dispositif antivol est dans sa position d'utilisation, c'est-à-dire lorsque les deux demi-coques 2, 2' sont en position de fermeture et viennent enserrer la tête d'attelage T de la remorque R.

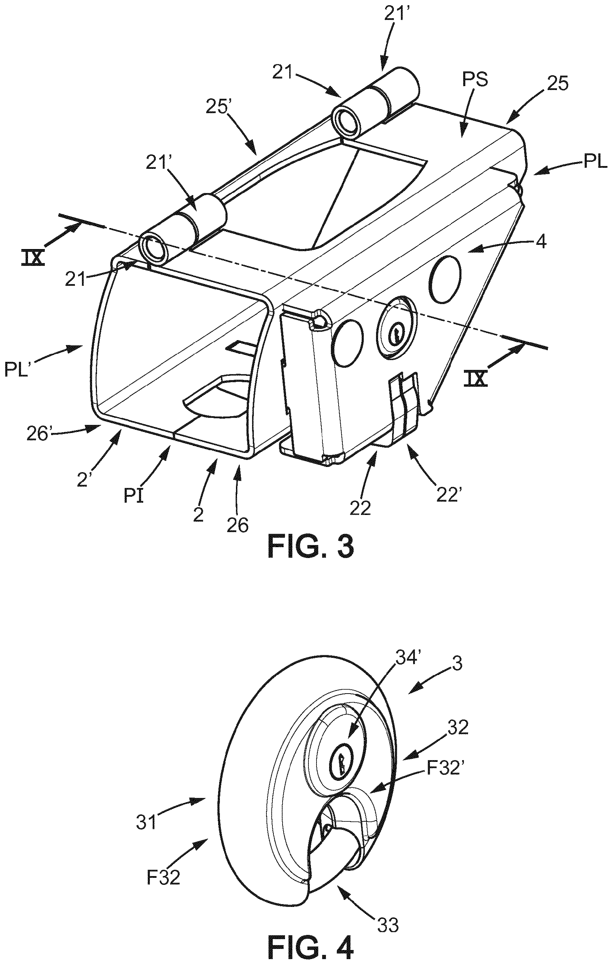

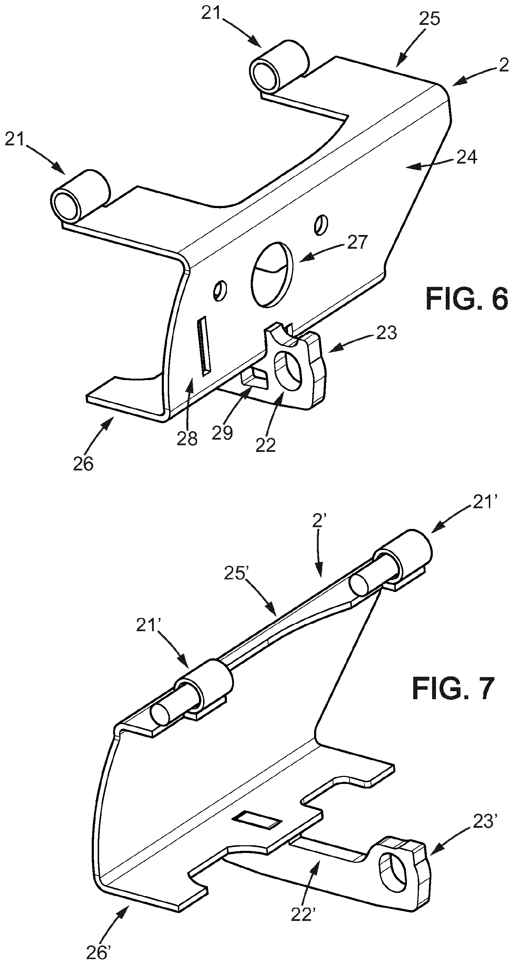

Comme visible sur les exemples de réalisation des figures 3, 5, 6, 7 et 10, lesdites pattes de fixation 22, 22' peuvent être fixées au niveau de chacune desdites parties 26, 26' de paroi inférieure PI de chacune desdites deux demi-coques 2, 2'.

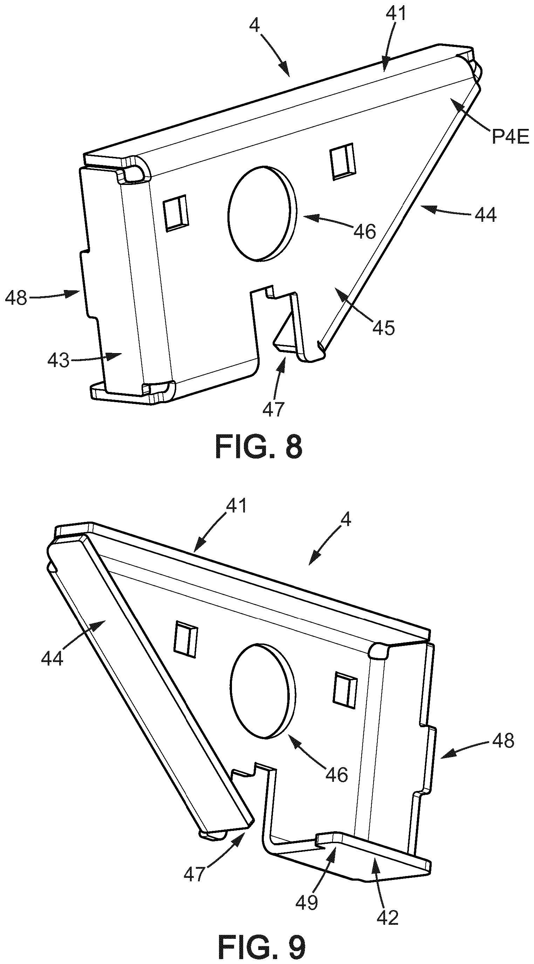

Comme visible sur l'exemple de réalisation de la figure 8 ou de la figure 9, le carénage 4 peut avantageusement comprendre une paroi supérieure 41, une paroi inférieure 42, une paroi arrière 43, une paroi avant 44 et une paroi latérale 45. Le carénage est prévu pour être fixé sur ladite paroi 24 de la demi-coque 2 de telle sorte que sa paroi latérale 45 se retrouve en vis-à-vis de la paroi 24 de la demi-coque 2.

Avantageusement, une échancrure 47 peut être ménagée dans ladite paroi latérale 45 du carénage 4 de sorte à recevoir les pattes de fixation 22, 22' des deux demi-coques 2, 2', lorsque celles-ci se trouvent en position de fermeture.

Comme visible sur les exemples de réalisation des figures 3, 5, 6 et 7, deux charnières 21, 21' sont prévues afin d'assurer l'articulation des deux demi-coques 2, 2', chaque charnière comprenant une première partie 21 ménagée sur une demi-coque 2 venant s'engager dans une deuxième partie ménagée sur l'autre demi-coque 2'. Les charnières 21 et 21' sont disposées sur la paroi supérieure PS du boîtier, opposée à la paroi inférieur PI portant les pattes de fixation 22, 22'.

Selon un mode de réalisation, le carénage 4 est conformé de sorte à exercer un appui sur le cadenas 31, lorsque fixé sur ladite paroi 24, de sorte à assurer son maintien en position par rapport à la demi coque 2, selon une direction perpendiculaire au plan de ladite paroi 24.

Ainsi, il n'y a pas besoin de prévoir de moyen supplémentaire pour assurer le maintien en position du cadenas 31 selon la direction perpendiculaire au plan de la paroi 24 de la demi-coque 2 recevant le carénage 4.

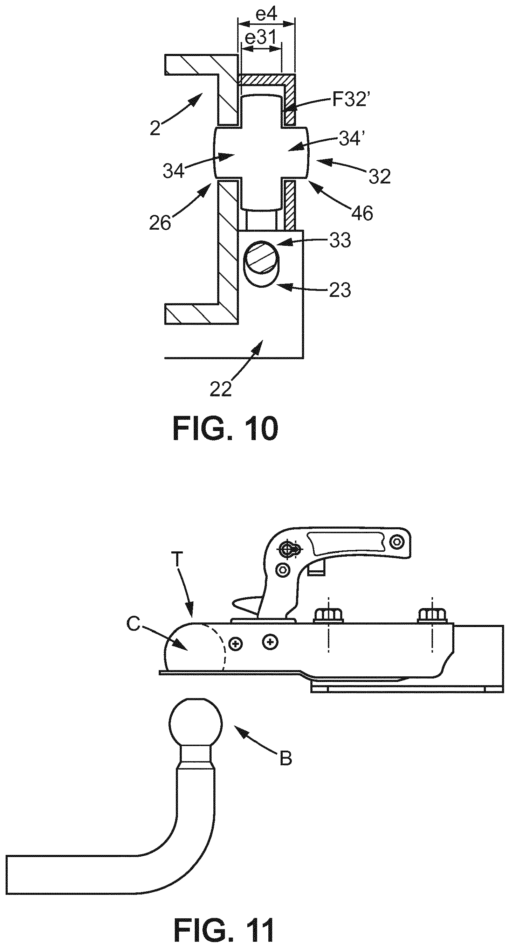

A cet effet, comme visible sur l'exemple de réalisation de la figure 10, le carénage 4 peut être d'épaisseur e4 sensiblement égale à l'épaisseur e31 du cadenas 31 (moins l'épaisseur de la paroi du carénage 4). On entend notamment par épaisseur e4 du carénage 4 la largeur de la paroi arrière 43, ou de la paroi avant 44 du carénage 4.

Avantageusement, comme visible sur les exemples de réalisation des figures 4 et 10, la portion de réception d'une clé 32 du cadenas 31 peut comporter deux faces circulaires F32, F32' parallèles entre-elles, l'épaisseur e31 du cadenas 31 correspondant à la distance séparant ces deux faces circulaires F32, F32'.

Selon un mode de réalisation, le dispositif antivol 1 comprend des moyens de centrage 27, 34, 34', 46 assurant le centrage du cadenas 31 par rapport au carénage 4 et par rapport à ladite paroi 24 de la demi-coque 2 recevant ledit carénage 4.

Cette disposition avantageuse de l'invention permet que, une fois le cadenas 31 disposé dans le logement formé entre le carénage 4 et ladite paroi 24 de la demi-coque 2, le cadenas 31 demeure stable en position par rapport au carénage 4 et par rapport à ladite paroi 24, notamment afin de s'assurer qu'une clé puisse être introduite convenablement dans ladite portion de réception d'une clé 32, et que la anse 33 puisse s'engager et s'escamoter sans encombre desdits perçages 23, 23' desdites pattes de fixation 22, 22'.

Selon un mode de réalisation, la portion de réception d'une clé 32 du cadenas 31 comporte deux faces circulaires F32, F32' parallèles entre-elles, une des faces F32' étant en appui contre ladite paroi 24 de la demi-coque 2 recevant le carénage 4, les moyens de centrage 27, 34, 34', 46 comportant une première protubérance 34 ménagée en saillie sur une desdites faces F32 de la portion de réception d'une clé 32 du cadenas 31, ainsi qu'un premier logement 27 ménagé sur ladite paroi 24 de la demi-coque 2, conformé de sorte à recevoir ladite première protubérance 34 au jeu d'emboîtement près, et/ou une deuxième protubérance 34' ménagée en saillie sur l'autre face F32' de la portion de réception d'une clé 32 du cadenas 31 et un deuxième logement 46 ménagé sur le carénage 4, conformé de sorte à recevoir la deuxième protubérance 34' au jeu d'emboîtement près.

Avantageusement, comme visible sur l'exemple de réalisation de la figure 10, la première protubérance 34 et la deuxième protubérance 34' peuvent être sensiblement identiques, par exemple de forme cylindrique et faisant saillie depuis chacune des faces de la portion de réception d'une clé 32 du cadenas 31, selon une direction sensiblement perpendiculaire au plan de chacune desdites faces F32, F32'.

Par ailleurs, la longueur de la première protubérance 24 correspond avantageusement à l'épaisseur de la tôle formant ladite paroi 24 de la demi-coque 2, et la longueur de la deuxième protubérance 34' correspond à l'épaisseur de la tôle formant ledit carénage 4.

De même, comme visible sur les exemples de réalisation 5, 6 et 8 à 10, le premier logement 27 et le deuxième logement 46 peuvent être sensiblement identiques, par exemple de formes circulaires, de rayon sensiblement égal au rayon de chacune des protubérances 34, 34'.

Selon un mode de réalisation, le carénage amovible 4 est fixé sur ladite paroi 24 de la demi-coque 2 par l'intermédiaire de deux vis 5, les vis 5 étant positionnées de part et d'autre du cadenas 31 et venant appuyer sur le cadenas 31, de sorte à assurer son maintien en position par rapport à la demi-coque 2, selon une direction parallèle au plan de ladite paroi 24 recevant le carénage 4.

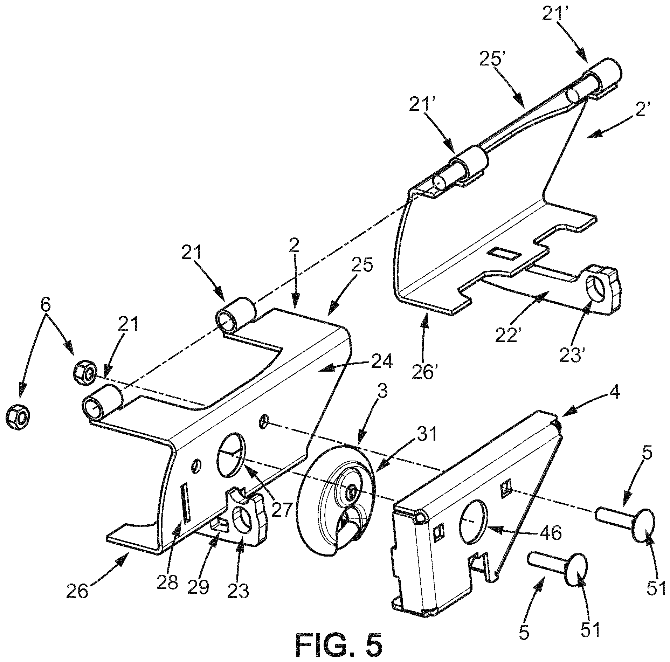

Comme visible sur l'exemple de réalisation de la figure 5, les vis sont prévues pour être disposées perpendiculairement au plan de la paroi 24, en étant par exemple reçues dans des perçages ménagés dans ladite paroi 24 et dans le carénage 4.

Ainsi, lesdites vis 5 peuvent à la fois avoir pour fonction d'assurer la fixation du carénage 4 sur la demi-coque 2, mais également d'assurer le maintien en position du cadenas 31 par rapport à la demi-coque 2, selon une direction parallèle au plan de la paroi 24, ce qui permet de ne pas avoir à prévoir de pièce supplémentaire pour assurer cette dernière fonction de maintien en position, et donc de simplifier la réalisation d'un dispositif antivol 1 selon l'invention.

Cette disposition avantageuse de l'invention permet également que, une fois le cadenas 31 disposé dans le logement formé entre le carénage 4 et ladite paroi 24 de la demi-coque 2, et le carénage 4 fixé à la paroi 24 de la demi-coque 2, le cadenas 31 demeure stable en position par rapport au carénage 4 et par rapport à ladite paroi 24, notamment afin de s'assurer qu'une clé puisse être introduite convenablement dans ladite portion de réception d'une clé 32, et que la anse 33 puisse s'engager et s'escamoter sans encombre desdits perçages 23, 23' desdites pattes de fixation 22, 22'.

Selon un mode de réalisation, les vis 5 comportent une tête lisse 51, positionnée au niveau d'une paroi extérieure P4E du carénage 4, et lesdites vis 5 coopèrent avec des boulons 6 positionnés au niveau d'une face intérieure de ladite paroi 24 de la demi-coque 2 recevant le carénage 4.

Ainsi, grâce à cette disposition avantageuse de l'invention, lorsque les deux demi-coques 2, 2' se trouvent en position verrouillée, enserrant ladite tête d'attelage T, les écrous 6 sont inaccessibles depuis l'extérieur du boîtier formé par les deux demi-coques 2, 2' et la tête lisse 51 des vis 5 empêche leur desserrage. Le carénage 4 ne peut donc être ôté de ladite demi-coque 2 afin de pouvoir accéder au cadenas 31, notamment pour une personne malintentionnée afin de voler la remorque R.

Selon un mode de réalisation, ladite paroi 24 de la demi-coque 2 recevant le carénage 4 en fixation comporte une rainure 28 conformée de sorte à recevoir une patte saillante 48 du carénage 4 afin d'assurer le maintien en position du carénage 4 par rapport à la demi-coque 2.

Avantageusement, comme visible sur les exemples de réalisation des figures 3, 5, 8 et 9, ladite patte saillante 48 peut être ménagée dans le prolongement de la paroi arrière 43 du carénage 4, en étant orientée selon une direction sensiblement perpendiculaire au plan de la paroi latérale 45 du carénage 4.

Une telle patte saillante 48 coopérant avec une telle rainure 28 permet avantageusement d'assurer le centrage du carénage 4 par rapport à la paroi 24 de la demi-coque 2, notamment en interdisant le mouvement relatif du carénage 4 par rapport à la demi-coque 2, une fois ladite patte saillante 48 engagée dans ladite rainure 28.

Selon un mode de réalisation, la patte de fixation 22 de la demi-coque 2 recevant le carénage 4 comporte une rainure 29 conformée de sorte à recevoir une patte saillante 49 du carénage 4 afin d'assurer le maintien en position du carénage 4 par rapport à la demi-coque 2.

Avantageusement, comme visible sur l'exemple de réalisation de la figure 9, ladite patte saillante 49 peut être ménagée dans le prolongement de la paroi inférieure 42 du carénage 4, en étant orientée selon une direction sensiblement parallèle au plan de la paroi latérale 45 du carénage 4.

Une telle patte saillante 49 coopérant avec une telle rainure 29 permet avantageusement d'assurer le centrage du carénage 4 par rapport à la paroi 24 de la demi-coque 2, notamment en interdisant le mouvement relatif du carénage 4 par rapport à la demi-coque 2, une fois ladite patte saillante 48 engagée dans ladite rainure 28.

Selon un mode de réalisation, le cadenas 31 est un cadenas en forme de disque, ladite portion de réception d'une clé 32 comprenant deux faces circulaires F32, F32', parallèles entre elles, l'anse 33 du cadenas 31 s'étendant dans le prolongement desdites faces circulaires F32, F32', une desdites faces circulaires F32, F32' étant en appui contre ladite paroi 24 de la demi-coque 2 recevant le carénage amovible 4.

Un tel cadenas 31 peut par exemple être celui commercialisé par la société Allemande *« ABUS* » sous le nom de « *Diskus ».*

Un tel cadenas 31 est particulièrement avantageux en ce qu'il présente un encombrement réduit, permettant sa disposition dans le logement formé entre le carénage 4 et ladite paroi 24 de la demi-coque 2, avec un degré de sécurité important, la anse 33, qui est généralement la partie du cadenas 31 la plus exposée en termes de sécurité, étant de dimensions faibles par rapport à la portion de réception d'une clé 32. L'invention concerne également une remorque R comprenant une tête d'attelage T présentant une cavité C destinée à recevoir dans une position attelée une boule d'attelage B, de forme complémentaire à la cavité C, montée sur un véhicule tracteur V pour solidariser ladite remorque R et ledit véhicule V, et un dispositif antivol 1 selon l'invention, fixé sur ladite tête d'attelage T, les demi-coques 2, 2' du dispositif antivol 1 venant enserrer ladite tête d'attelage T, en position de fermeture.

Ainsi, dans une telle remorque R, la tête d'attelage T, et notamment ladite cavité C de la tête d'attelage T est inaccessible et ne peut être fixée sur la boule d'attelage B d'un véhicule tracteur, notamment afin de voler la remorque R.

L'invention concerne encore un ensemble comprenant :
- un véhicule tracteur V comprenant une boule d'attelage B,
- une remorque R comprenant une tête d'attelage T présentant une cavité C recevant dans une position attelée ladite boule d'attelage B, de forme complémentaire à la cavité C,
- un dispositif antivol 1 selon l'une des revendications 1 à 10, les demi-coques 2, 2' du dispositif antivol 1 venant enserrer ladite tête d'attelage T et ladite boule d'attelage B, en position de fermeture.

Ainsi, dans un tel ensemble, ni la tête d'attelage T, ni la boule d'attelage B ne sont accessibles, et elles ne peuvent donc pas être désolidarisées, notamment par une personne malintentionnée voulant voler la remorque R.

L'invention concerne enfin un procédé d'installation d'un dispositif antivol 1 selon l'invention sur une tête d'attelage T d'une remorque R, présentant une cavité C destinée à recevoir dans une position attelée une boule d'attelage B, de forme complémentaire à la cavité C, montée sur un véhicule tracteur V pour solidariser ladite remorque R et ledit véhicule V, ledit procédé comprenant les étapes :
a) ouverture du cadenas 31 du dispositif antivol 1,
b) positionnement des deux demi-coques 2, 2' en position d'ouverture,
c) mise en position du dispositif antivol 1 au niveau de la tête d'attelage T, de sorte que les deux demi-coques 2, 2' viennent enserrer ladite tête d'attelage T,
d) positionnement des deux demi-coques 2, 2' en position de fermeture,
e) fermeture du cadenas 31.

Un tel procédé est particulièrement simple et rapide à mettre un œuvre pour un opérateur, car seules les deux demi-coques 2, 2' doivent être mises en position par rapport à la tête d'attelage T, les autres éléments (le cadenas 31, le carénage 4, etc.) étant immobiles par rapport auxdites demi-coques 2, 2'.

Avantageusement, afin de réaliser la désinstallation d'un dispositif antivol 1 de la tête d'attelage T d'une remorque R, on peut réaliser les étapes suivantes :
f) ouverture du cadenas 31 du dispositif antivol 1,
g) positionnement des deux demi-coques 2, 2' en position d'ouverture,
h) retrait du dispositif antivol 1 de la tête d'attelage T.

Naturellement, d'autres modes de réalisation auraient pu être envisagés par l'Homme du métier sans pour autant sortir du cadre de l'invention définie par les revendications ci-après.

### NOMENCLATURE

### Etat de la technique

- 100.: Dispositif antivol
- 200, 200'.: Demi-coque
- 210, 210'.: Charnières
- 300.: Moyens de verrouillage
- 310.: Cadenas
- 320.: Portion de réception d'une clé
- 330.: Anse
- 340.: Languette

### Invention

- 1.: Dispositif antivol
- 2, 2'.: Demi-coque
- PI.: Paroi inférieure
- PS.: Paroi supérieure
- PL.: Première paroi latérale
- PL'.: Deuxième paroi latérale
- 21, 21'.: Charnière
- 22, 22'.: Patte de fixation
- 23, 23'.: Perçage
- 24.: Paroi
- 25, 25'.: Partie de paroi supérieure
- 26, 26'.: Partie de paroi inférieure
- 27.: Logement

- 28, 29.: Rainure
- 3.: Moyen de verrouillage
- 31.: Cadenas
- e31.: Epaisseur
- 32.: Portion de réception d'une clé
- F32, F32'.: Face circulaire
- 33.: Anse
- 34, 34'.: Protubérance
- 4.: Carénage
- e4.: Epaisseur
- 41.: Face supérieure
- 42.: Face inférieure
- 43.: Face arrière
- 44.: Face avant
- 45.: Face latérale
- 46.: Logement
- 47.: Rainure
- 48.: Patte
- 49.: Patte
- 5.: Vis
- 51.: Tête de vis
- 6.: Ecrou
- B.: Boule d'attelage
- C.: Cavité
- R.: Remorque
- T.: Tête d'attelage
- V.: Véhicule tracteur

## Revendications

1. Dispositif antivol (1) amovible pour attelage, ledit attelage comprenant une tête d'attelage (T) montée sur une remorque (R) et présentant une cavité (C) destinée à recevoir dans une position attelée une boule d'attelage (B), de forme complémentaire à la cavité(C), montée sur un véhicule tracteur (V) pour solidariser ladite remorque (R) et ledit véhicule (V),
ledit dispositif antivol (1) comportant :
- deux demi-coques (2, 2'), articulées via des charnières (21, 21'), aptes, d'une part, lorsque mises en butée l'une contre l'autre, dans une position de fermeture, à former un boîtier antivol, configuré pour venir enserrer ladite tête d'attelage (T), et éventuellement ladite boule d'attelage (B) fixée sur le véhicule tracteur (V), et d'autre part, lorsque écartées l'une de l'autre par rotation autour des charnières (21, 21'), à prendre une position d'ouverture permettant le retrait du dispositif antivol (1) de ladite tête d'attelage (T),
- un moyen de verrouillage (3) configuré pour bloquer les deux demi-coques (2, 2') dans la première position de fermeture avec un cadenas (31) présentant une portion de réception d'une clé (32) et une anse (33),
- chaque demi-coque (2, 2') est équipée d'une patte de fixation (22, 22'), chaque patte de fixation (22, 22') comportant un perçage (23, 23'), les perçages (23, 23') étant destinés à se retrouver en vis-à-vis l'un de l'autre lorsque les deux demi-coques (2, 2') sont dans ladite position de fermeture, **caractérisé en ce que** :
- le dispositif antivol comporte un carénage (4) fixé sur une paroi (24) de l'une des deux demi-coques (2, 2'), ledit carénage (4) formant avec ladite paroi (24) de la demi-coque (2) un logement, le logement recevant le cadenas (31), et maintenant le cadenas (31) dans une position telle que, dans ladite position de fermeture des deux demi-coques (2, 2'), ladite anse (33) est actionnable par l'intermédiaire d'une clé reçue dans ladite portion de réception d'une clé (32) du cadenas (31), afin de passer d'une position non verrouillée, dans laquelle elle est escamotée d'au moins un des perçages (23, 23') en vis-à-vis des pattes de fixation (22, 22') vers une position verrouillée, dans laquelle ladite anse (33) traverse les deux perçages (23, 23') en vis-à-vis des pattes de fixation (22, 22').

2. Dispositif selon la revendication 1, dans lequel, dans ladite position de fermeture, le carénage (4) est configuré de sorte à laisser accessible uniquement la portion de réception d'une clé (32) du cadenas (31), au moins partiellement, lorsque ledit carénage (4) est fixé sur ladite paroi de la demi-coque (2, 2').

3. Dispositif antivol (1) selon la revendication 1 ou 2 dans lequel le carénage (4) est conformé de sorte à exercer un appui sur le cadenas (31), lorsque fixé sur ladite paroi (24), de sorte à assurer son maintien en position par rapport à la demi-coque (2), selon une direction perpendiculaire au plan de ladite paroi (24).

4. Dispositif antivol (1) selon l'une des revendications 1 à 3, comprenant des moyens de centrage (27, 34, 34', 46) assurant le centrage du cadenas (31) par rapport au carénage (4) et par rapport à ladite paroi (24) de la demi-coque (2) recevant ledit carénage (4).

5. Dispositif antivol (1) selon la revendication 4, dans lequel la portion de réception d'une clé (32) du cadenas (31) comporte deux faces (F32, F32') parallèles entre-elles, une des faces (F32) étant en appui contre ladite paroi (24) de la demi-coque (2) recevant le carénage (4), les moyens de centrage (27, 34, 34', 46) comportant une première protubérance (34) ménagée en saillie sur une desdites faces (F32) de la portion de réception d'une clé (32) du cadenas (31), ainsi qu'un premier logement (27) ménagé sur ladite paroi (24) de la demi-coque (2), conformé de sorte à recevoir ladite première protubérance (34) au jeu d'emboîtement près, et/ou une deuxième protubérance (34') ménagée en saillie sur l'autre face de la portion de réception d'une clé (32) du cadenas (31) et un deuxième logement (46) ménagé sur le carénage (4), conformé de sorte à recevoir la deuxième protubérance (34') au jeu d'emboîtement près.

6. Dispositif antivol (1) selon l'une des revendications 1 à 5, dans lequel le boîtier formé par les deux demi-coques (2, 2') en position fermée est de forme sensiblement parallélépipédique, comprenant une paroi supérieure (PS), une paroi inférieure (PI), une première paroi latérale (PL) et une deuxième paroi latérale (PL'), chaque demi-coque (2, 2') comportant une partie (25, 25') de ladite paroi supérieure (PS), une partie (26, 26') de ladite paroi inférieure (PI) et une desdites parois latérales (PL, PL'), chaque patte de fixation (22, 22') de chaque demi-coque (2, 2') étant disposée sur la paroi inférieure (PI) du boîtier, la portion de chaque patte de fixation (22, 22') comportant le perçage (23, 23') étant positionnée débordante au niveau de ladite paroi (24) de la demi-coque (2) au niveau de laquelle est fixé le carénage (4).

7. Dispositif antivol (1) selon l'une des revendications 1 à 6, dans lequel le carénage amovible (4) est fixé sur ladite paroi (24) de la demi-coque (2) par l'intermédiaire de deux vis (5), les vis (5) étant positionnées de part et d'autre du cadenas (31) et venant appuyer sur le cadenas (31), de sorte à assurer son maintien en position par rapport à la demi-coque (2), selon une direction parallèle au plan de ladite paroi (24) recevant le carénage (4).

8. Dispositif antivol (1) selon la revendication 7, dans lequel les vis (5) comportent une tête lisse (51), positionnée au niveau d'une paroi extérieure du carénage (4), et lesdites vis (5) coopèrent avec des boulons (6) positionnés au niveau d'une face intérieure de ladite paroi (24) de la demi-coque (2) recevant le carénage (4).

9. Dispositif antivol (1) selon l'une des revendications 1 à 8 dans lequel ladite paroi (24) de la demi-coque (2) recevant le carénage (4) en fixation comporte une rainure (28) conformée de sorte à recevoir une patte saillante (48) du carénage (4) afin d'assurer le maintien en position du carénage (4) par rapport à la demi-coque (2).

10. Dispositif antivol (1) selon l'une des revendications 1 à 9, dans lequel la patte de fixation (22) de la demi-coque (2) recevant le carénage (4) comporte une rainure (29) conformée de sorte à recevoir une patte saillante (49) du carénage (4) afin d'assurer le maintien en position du carénage (4) par rapport à la demi-coque (2).

11. Dispositif antivol (1) selon l'une des revendications 1 à 10, dans lequel le cadenas (31) est un cadenas (31) en forme de disque, ladite portion de réception d'une clé (32) comprenant deux faces circulaires (F32, F32'), l'anse (33) du cadenas (31) s'étendant dans le prolongement desdites faces circulaires (F32, F32'), une desdites faces circulaires (F32) étant en appui contre ladite paroi (24) de la demi-coque (2) recevant le carénage amovible (4).

12. Remorque (R) comprenant une tête d'attelage (T) présentant une cavité (C) destinée à recevoir dans une position attelée une boule d'attelage (B), de forme complémentaire à la cavité (C), montée sur un véhicule tracteur (V) pour solidariser ladite remorque (R) et ledit véhicule (V), et un dispositif antivol (1) selon l'une des revendications 1 à 10 fixé sur ladite tête d'attelage (T), les demi-coques (2, 2') du dispositif antivol (1) venant enserrer ladite tête d'attelage (T), en position de fermeture.

13. Ensemble comprenant :
- un véhicule tracteur (V) comprenant une boule d'attelage (B),
- une remorque (R) comprenant une tête d'attelage (T) présentant une cavité (C) recevant dans une position attelée ladite boule d'attelage (B), de forme complémentaire à la cavité (C),
- un dispositif antivol (1) selon l'une des revendications 1 à 11, les demi-coques (2, 2') du dispositif antivol (1) venant enserrer ladite tête d'attelage (T) et ladite boule d'attelage (B), en position de fermeture.

14. Procédé d'installation d'un dispositif antivol (1) selon l'une des revendications 1 à 10 sur une tête d'attelage (T) d'une remorque (R), présentant une cavité (C) destinée à recevoir dans une position attelée une boule d'attelage (B), de forme complémentaire à la cavité (C), montée sur un véhicule tracteur (V) pour solidariser ladite remorque (R) et ledit véhicule (V), ledit procédé comprenant les étapes :
a) ouverture du cadenas (31) du dispositif antivol (1),
b) positionnement des deux demi-coques (2, 2') en position d'ouverture,
c) mise en position du dispositif antivol au niveau de la tête d'attelage, de sorte que les deux demi-coques (2, 2') viennent enserrer ladite tête d'attelage (T),
d) positionnement des deux demi-coques (2, 2') en position de fermeture,
e) fermeture du cadenas (31).

## Patentansprüche

1. Entfernbare Diebstahlsicherungsvorrichtung (1) für eine Anhängerkupplung, wobei die Anhängerkupplung eine Kugelkopfkupplung (T) umfasst, die an einen Anhänger (R) montiert ist und einen Hohlraum (C) aufweist, der dazu bestimmt ist, beim Ankuppeln eine Kupplungskugel (B) aufzunehmen, die eine zum Hohlraum (C) komplementäre Form hat und an ein Zugfahrzeug (V) montiert ist, um den Anhänger (R) und das Fahrzeug (V) fest miteinander zu verbinden,
wobei die Diebstahlsicherungsvorrichtung (1) Folgendes aufweist:
- zwei Halbschalen (2, 2'), die über Scharniere (21, 21') gelenkig miteinander verbunden sind und fähig sind, einerseits, wenn sie in einer Schließstellung in Anlage aneinander sind, ein Diebstahlsicherungsgehäuse zu bilden, das so ausgestaltet ist, dass es die Kugelkopfkupplung (T) und gegebenenfalls die am Zugfahrzeug (V) befestigte Kupplungskugel (B) umklammert, und andererseits, wenn sie durch Drehung um die Scharniere (21, 21') voneinander getrennt sind, eine Öffnungsstellung einzunehmen, die das Entfernen der Diebstahlsicherungsvorrichtung (1) von der Kugelkopfkupplung (T) ermöglicht,
- ein Verriegelungsmittel (3), das so ausgestaltet ist, dass es die beiden Halbschalen (2, 2') in der ersten Schließstellung mit einem Hangschloss (31) sichert, das einen Schlüsselaufnahmeabschnitt (32) und einen Bügel (33) aufweist,
- jede Halbschale (2, 2') mit einer Halterung (22, 22') ausgestattet ist, wobei jede Halterung (22, 22') eine durchgehende Bohrung (23, 23') aufweist, wobei die durchgehenden Bohrungen (23, 23') dazu bestimmt sind, einander gegenüberzuliegen, wenn sich die beiden Halbschalen (2, 2') in der Schließstellung befinden, **dadurch gekennzeichnet, dass**
- die Diebstahlsicherungsvorrichtung eine Schutzabdeckung (4) aufweist, die an einer Wand (24) einer der beiden Halbschalen (2, 2') befestigt ist, wobei die Schutzabdeckung (4) mit der Wand (24) der Halbschale (2) eine Aufnahme bildet, die Aufnahme das Hangschloss (31) aufnimmt und das Hangschloss (31) in einer solchen Stellung hält, dass in der Schließstellung der beiden Halbschalen (2, 2') der Bügel (33) mittels eines Schlüssels betätigbar ist, der im Schlüsselaufnahmeabschnitt (32) des Hangschlosses (31) aufgenommen ist, um aus einer nicht verriegelten Stellung, in der er aus mindestens einer der durchgehenden Bohrungen (23, 23') gegenüber den Halterungen (22, 22') zurückgezogen ist, in eine verriegelte Stellung überzugehen, in welcher der Bügel (33) die zwei durchgehenden Bohrungen (23, 23') gegenüber den Halterungen (22, 22') durchquert.

2. Vorrichtung nach Anspruch 1, wobei die Schutzabdeckung (4) so ausgestaltet ist, dass in der Schließstellung nur der Schlüsselaufnahmeabschnitt (32) des Hangschlosses (31), zumindest teilweise, zugänglich bleibt, wenn die Schutzabdeckung (4) an der Wand der Halbschale (2, 2') befestigt ist.

3. Diebstahlsicherungsvorrichtung (1) nach Anspruch 1 oder 2, wobei die Schutzabdeckung (4) so ausgebildet ist, dass sie, wenn sie an der Wand (24) befestigt ist, eine Druckkraft auf das Hangschloss (31) ausübt, um sicherzustellen, dass es in Bezug auf die Halbschale (2) in einer zur Ebene der Wand (24) lotrechten Richtung festgehalten wird.

4. Diebstahlsicherungsvorrichtung (1) nach einem der Ansprüche 1 bis 3, Zentriermittel (27, 34, 34', 46) umfassend, die die Zentrierung des Hangschlosses (31) in Bezug auf die Schutzabdeckung (4) und in Bezug auf die Wand (24) der Halbschale (2), die die Schutzabdeckung (4) aufnimmt, sicherstellen.

5. Diebstahlsicherungsvorrichtung (1) nach Anspruch 4, wobei der Schlüsselaufnahmeabschnitt (32) des Hangschlosses (31) zwei Flächen (F32, F32') aufweist, die parallel zueinander sind, wobei eine der Flächen (F32) an der Wand (24) der Halbschale (2), die die Schutzabdeckung (4) aufnimmt, in Anlage ist, wobei die Zentriermittel (27, 34, 34', 46) Folgendes aufweisen: einen ersten Vorsprung (34), der an einer der Flächen (F32) des Schlüsselaufnahmeabschnitts (32) des Hangschlosses (31) vorspringend vorgesehen ist, sowie eine erste Aufnahme (27), die an der Wand (24) der Halbschale (2) vorgesehen und so ausgebildet ist, dass sie den ersten Vorsprung (34) mit einem nahezu einem Einpassen entsprechenden Spiel aufnimmt, und/oder einen zweiten Vorsprung (34'), der an der anderen Fläche des Schlüsselaufnahmeabschnitts (32) des Hangschlosses (31) vorspringend vorgesehen ist, und eine zweite Aufnahme (46), die an der Schutzabdeckung (4) vorgesehen ist und so ausgebildet ist, dass sie den zweiten Vorsprung (34') mit einem nahezu einem Einpassen entsprechenden Spiel aufnimmt.

6. Diebstahlsicherungsvorrichtung (1) nach einem der Ansprüche 1 bis 5, wobei das von den beiden Halbschalen (2, 2') gebildete Gehäuse in geschlossener Stellung im Wesentlichen die Form eines Parallelepipeds hat, das eine obere Wand (PS), eine untere Wand (PI), eine erste Seitenwand (PL) und eine zweite Seitenwand (PL') umfasst, wobei jede Halbschale (2, 2') einen Teil (25, 25') der oberen Wand (PS), einen Teil (26, 26') der unteren Wand (PI) und eine der Seitenwände (PL, PL') aufweist und jede Halterung (22, 22') jeder Halbschale (2, 2') an der unteren Wand (PI) des Gehäuses angeordnet ist, wobei der Abschnitt jeder Halterung (22, 22'), der die durchgehende Bohrung (23, 23') aufweist, in Bezug auf die Wand (24) der Halbschale (2), an der die Schutzabdeckung (4) befestigt ist, vorstehend angeordnet ist.

7. Diebstahlsicherungsvorrichtung (1) nach einem der Ansprüche 1 bis 6, wobei die entfernbare Schutzabdeckung (4) an der Wand (24) der Halbschale (2) mittels zweier Schrauben (5) befestigt ist, wobei die Schrauben (5) beiderseits des Hangschlosses (31) positioniert sind und auf das Hangschloss (31) drücken, um sicherzustellen, dass es in Bezug auf die Halbschale (2) in einer Richtung parallel zur Ebene der die Schutzabdeckung (4) aufnehmenden Wand (24) in Stellung gehalten wird.

8. Diebstahlsicherungsvorrichtung (1) nach Anspruch 7, wobei die Schrauben (5) einen glatten Kopf (51) aufweisen, der an einer Außenwand der Schutzabdeckung (4) positioniert ist, und die Schrauben (5) mit Mutterschrauben (6) zusammenwirken, die an einer Innenfläche der Wand (24) der Halbschale (2), die die Schutzabdeckung (4) aufnimmt, positioniert sind.

9. Diebstahlsicherungsvorrichtung (1) nach einem der Ansprüche 1 bis 8, wobei die Wand (24) der Halbschale (2), die die zu befestigende Schutzabdeckung (4) aufnimmt, eine Nut (28) aufweist, die so ausgebildet ist, dass sie eine vorspringende Nase (48) der Schutzabdeckung (4) aufnimmt, um sicherzustellen, dass die Schutzabdeckung (4) in Bezug auf die Halbschale (2) in ihrer Stellung gehalten wird.

10. Diebstahlsicherungsvorrichtung (1) nach einem der Ansprüche 1 bis 9, wobei die Halterung (22) der Halbschale (2), die die Schutzabdeckung (4) aufnimmt, eine Nut (29) aufweist, die so ausgebildet ist, dass sie eine vorspringende Nase (49) der Schutzabdeckung (4) aufnimmt, um sicherzustellen, dass die Schutzabdeckung (4) in Bezug auf die Halbschale (2) in ihrer Stellung gehalten wird.

11. Diebstahlsicherungsvorrichtung (1) nach einem der Ansprüche 1 bis 10, wobei das Hangschloss (31) ein Hangschloss (31) in Scheibenform ist, wobei der Schlüsselaufnahmeabschnitt (32) zwei kreisförmige Flächen (F32, F32') umfasst, der Bügel (33) des Hangschlosses (31) sich in der Verlängerung der kreisförmigen Flächen (F32, F32') erstreckt und eine der kreisförmigen Flächen (F32) an der Wand (24) der Halbschale (2), die die entfernbare Schutzabdeckung (4) aufnimmt, in Anlage ist.

12. Anhänger (R), umfassend eine Kugelkopfkupplung (T), die einen Hohlraum (C) aufweist, der dazu bestimmt ist, beim Ankuppeln eine Kupplungskugel (B) aufzunehmen, die eine zum Hohlraum (C) komplementäre Form hat und an ein Zugfahrzeug (V) montiert ist, um den Anhänger (R) und das Fahrzeug (V) fest miteinander zu verbinden, und eine Diebstahlsicherungsvorrichtung (1) nach einem der Ansprüche 1 bis 10, die an der Kugelkopfkupplung (T) befestigt ist, wobei die Halbschalen (2, 2') der Diebstahlsicherungsvorrichtung (1) die Kugelkopfkupplung (T) in der Schließstellung umklammern.

13. Gesamtheit, umfassend:
- ein Zugfahrzeug (V) mit einer Kupplungskugel (B),
- einen Anhänger (R) mit einer Kugelkopfkupplung (T), die einen Hohlraum (C) aufweist, der beim Ankuppeln die Kupplungskugel (B) aufnimmt, die eine zum Hohlraum (C) komplementäre Form hat,
- eine Diebstahlsicherungsvorrichtung (1) nach einem der Ansprüche 1 bis 11, wobei die Halbschalen (2, 2') der Diebstahlsicherungsvorrichtung (1) in der Schließstellung die Kugelkopfkupplung (T) und die Kupplungskugel (B) umklammern.

14. Verfahren zur Installierung einer Diebstahlsicherungsvorrichtung (1) nach einem der Ansprüche 1 bis 10 an einer Kugelkopfkupplung (T) eines Anhängers (R), die einen Hohlraum (C) aufweist, der dazu bestimmt ist, beim Ankuppeln eine Kupplungskugel (B) aufzunehmen, die eine zum Hohlraum (C) komplementäre Form hat und an ein Zugfahrzeug (V) montiert ist, um den Anhänger (R) und das Fahrzeug (V) fest miteinander zu verbinden, wobei das Verfahren die folgenden Schritte umfasst:
a) Aufschließen des Hangschlosses (31) der Diebstahlsicherungsvorrichtung (1),
b) Bringen der beiden Halbschalen (2, 2') in Öffnungsstellung,
c) Positionieren der Diebstahlsicherungsvorrichtung an der Kugelkopfkupplung derart, dass die beiden Halbschalen (2, 2') die Kugelkopfkupplung (T) umklammern,
d) Bringen der beiden Halbschalen (2, 2') in Schließstellung,
e) Zuschließen des Hangschlosses (31).

## Claims

1. A removable anti-theft device (1) for a coupler, said coupler comprising a coupling head (T) mounted on a trailer (R) and having a cavity (C) intended to receive in a coupled position a coupling ball (B), having a shape complementary to the cavity (C), mounted on a towing vehicle (V) to secure said trailer (R) and said vehicle (V),
said anti-theft device (1) including:
- two half-shells (2, 2'), articulated via hinges (21, 21'), capable, on the one hand, when abutted against each other, in a closed position, of forming an anti-theft case, configured to grip said coupling head (T), and optionally said coupling ball (B) fastened on the towing vehicle (V), and on the other hand, when spaced apart from each other by rotation around the hinges (21, 21'), of taking an open position allowing the removal of the anti-theft device (1) from said coupling head (T),
- a locking means (3) configured to block the two half-shells (2, 2') in the first closed position with a padlock (31) having a portion for receiving a key (32) and a handle (33),
- each half-shell (2, 2') is equipped with a fastening tab (22, 22'), each fastening tab (22, 22') including a bore (23, 23'), the bores (23, 23') being intended to meet facing each other when the two half-shells (2, 2') are in said closed position, **characterised in that**
- the anti-theft device includes a fairing (4) fastened on a wall (24) of one of the two half-shells (2, 2'), said fairing (4) forming with said wall (24) of the half-shell (2) a housing, the housing receiving the padlock (31), and maintaining the padlock (31) in a position such that, in said closed position of the two half-shells (2, 2'), said handle (33) can be actuated by means of a key received in said portion for receiving a key (32) of the padlock (31), in order to switch from an unlocked position, wherein it is retracted by at least one of the bores (23, 23') facing the fastening tabs (22, 22') to a locked position, wherein said handle (33) passes through the two bores (23, 23') facing the fastening tabs (22, 22').

2. The device according to claim 1, wherein, in said closed position, the fairing (4) is configured so as to leave only the portion for receiving a key (32) of the padlock (31) at least partially accessible when said fairing (4) is fastened to said wall of the half-shell (2, 2').

3. The anti-theft device (1) according to claim 1 or 2 wherein the fairing (4) is shaped so as to exert a pressure on the padlock (31), when it is fastened on said wall (24), so as to ensure that it is held in position relative to the half-shell (2), in a direction perpendicular to the plane of said wall (24).

4. The anti-theft device (1) according to one of claims 1 to 3, comprising centring means (27, 34, 34', 46) ensuring the centring of the padlock (31) relative to the fairing (4) and relative to said wall (24) of the half-shell (2) receiving said fairing (4).

5. The anti-theft device (1) according to claim 4, wherein the portion for receiving a key (32) of the padlock (31) has two faces (F32, F32') parallel to each other, one of the faces (F32) being pressed against said wall (24) of the half-shell (2) receiving the fairing (4), the centring means (27, 34, 34', 46) including a first protuberance (34) formed protruding on one of said faces (F32) of the portion for receiving a key (32) of the padlock (31), as well as a first housing (27) arranged on said wall (24) of the half-shell (2), shaped as so as to receive said first protuberance (34) except for the interlocking clearance, and/or a second protuberance (34') formed protruding on the other face of the portion for receiving a key (32) of the padlock (31) and a second housing (46) arranged on the fairing (4), shaped so as to receive the second protuberance (34') except for the interlocking clearance.

6. The anti-theft device (1) according to one of claims 1 to 5, wherein the case formed by the two half-shells (2, 2') in the closed position is substantially parallelepipedal in shape, comprising an upper wall (PS), a bottom wall (PI), a first side wall (PL) and a second side wall (PL'), each half-shell (2, 2') including a part (25, 25') of said upper wall (PS), a part (26, 26') of said bottom wall (PI) and one of said side walls (PL, PL'), each fastening tab (22, 22') of each half-shell (2, 2') being disposed on the bottom wall (PI) of the case, the portion of each fastening tab (22, 22') including the bore (23, 23') being positioned projecting at said wall (24) of the half-shell (2) at which the fairing (4) is fastened.

7. The anti-theft device (1) according to one of claims 1 to 6, wherein the removable fairing (4) is fastened on said wall (24) of the half-shell (2) by means of two screws (5), the screws (5) being positioned on either side of the padlock (31) and pressing on the padlock (31), so as to ensure that it is held in position relative to the half-shell (2), in a direction parallel to the plane of said wall (24) receiving the fairing (4).

8. The anti-theft device (1) according to claim 7, wherein the screws (5) include a smooth head (51), positioned at an outer wall of the fairing (4), and said screws (5) cooperate with bolts (6) positioned at an inner face of said wall (24) of the half-shell (2) receiving the fairing (4).

9. The anti-theft device (1) according to one of claims 1 to 8 wherein said wall (24) of the half-shell (2) receiving the fairing (4) in fastening includes a groove (28) shaped so as to receive a protruding tab (48) of the fairing (4) in order to ensure that the fairing (4) is held in position relative to the half-shell (2).

10. The anti-theft device (1) according to one of claims 1 to 9, wherein the fastening lug (22) of the half-shell (2) receiving the fairing (4) includes a groove (29) shaped so as to receive a protruding tab (49) of the fairing (4) in order to ensure that the fairing (4) is held in position relative to the half-shell (2).

11. The anti-theft device (1) according to one of claims 1 to 10, wherein the padlock (31) is a disc-shaped padlock (31), said portion for receiving a key (32) comprising two circular faces (F32, F32'), the handle (33) of the padlock (31) extending in the continuation of said circular faces (F32, F32'), one of said circular faces (F32) being pressing against said wall (24) of the half-shell (2) receiving the removable fairing (4).

12. A trailer (R) comprising a coupling head (T) having a cavity (C) intended to receive in a coupled position a coupling ball (B), having a shape complementary to the cavity (C), mounted on a towing vehicle (V) to secure said trailer (R) and said vehicle (V), and an anti-theft device (1) according to one of claims 1 to 10 fastened on said coupling head (T), the half-shells (2, 2') of the anti-theft device (1) gripping said coupling head (T), in the closed position.

13. An assembly comprising:
- a towing vehicle (V) comprising a coupling ball (B),
- a trailer (R) comprising a coupling head (T) having a cavity (C) receiving in a coupled position said coupling ball (B), having a shape complementary to the cavity (C),
- an anti-theft device (1) according to one of claims 1 to 11, the half-shells (2, 2') of the anti-theft device (1) gripping said coupling head (T) and said coupling ball (B), in the closed position.

14. A method for installing an anti-theft device (1) according to one of claims 1 to 10 on a coupling head (T) of a trailer (R), having a cavity (C) intended to receive in a coupled position, a coupling ball (B), having a shape complementary to the cavity (C), mounted on a towing vehicle (V) to secure said trailer (R) and said vehicle (V), said method comprising the steps:
a) opening the padlock (31) of the anti-theft device (1),
b) positioning the two half-shells (2, 2') in the open position,
c) putting the anti-theft device in position at the coupling head, so that the two half-shells (2, 2') grip said coupling head (T),
d) positioning the two half-shells (2, 2') in the closed position,
e) closing the padlock (31).
